# EUROPEAN PATENT APPLICATION

(11) **EP 2 835 723 A1**
(43) Date of publication of application: **11.02.2015**
(21) Application number: 14180376.7
(22) Date of filing: 08.08.2014
(51) Int. Cl.: G06F 3/0354, G06F 3/0488

(54) **Method and apparatus for providing intelligent information**

(30) Priority: 08.08.2013 KR 20130094304
(71) Applicant: Samsung Electronics Co., Ltd, Gyeonggi-do 443-742 (KR)
(72) Inventor: Jung, Ho-Young, Gyeonggi-do (KR); Chang, Won-Suk, Gyeonggi-do (KR); Kim, Moo-Rim, Gyeonggi-do (KR); Kim, Ji-Hoon, Seoul (KR); Ahn, Hee-Bum, Seoul (KR); Lee, Ki-Bok, Seoul (KR); Lee, Dong-Chang, Gyeonggi-do (KR); Lee, Jae-Woong, Gyeonggi-do (KR)
(74) Representative: Grünecker, Kinkeldey, Stockmair & Schwanhäusser

(57) **Abstract**

An intelligent information providing method and terminal are provided. The method includes: detecting a pen touch input; determining an environment in which the pen touch input is made; collecting information corresponding to the pen touch input; building a context model for the collected information, in consideration of the environment in which the pen touch input is made; and providing inference information corresponding to the built context model.

## Description

### BACKGROUND OF THE INVENTION

### 1. Field of the Invention

The present disclosure relates generally to a method of providing intelligent information using a mobile terminal, and more particularly, to a method of collecting data for providing intelligent information.

### 2. Description of the Related Art

Lately, services and additional functions that are provided by a terminal (particularly, a mobile terminal) are increasing and diversified. In order to raise the effective value of a terminal and satisfy users' various demands, various applications that are executable in a terminal are being developed.

A terminal can store basic applications developed by a manufacturing company of the terminal and installed in the terminal and additional applications downloaded from an application sales website through the Internet and execute the applications. The additional applications may have been developed by general developers and registered in the application sales website. Anyone who has developed applications can freely sell the applications to a user of the terminal through the application sales website. Lately, tens of to hundreds of thousands of applications are offered free or on pay to a terminal according to the kind of the terminal.

Meanwhile, a mobile terminal tends to be carried by a user. Considering this, trials have been conducted, by analyzing the user's pattern of using the mobile terminal, to intelligently provide a user with various information the user needs.

For example, a typical method of providing intelligent information is to collect information based on inputs from a user, such as search keywords, shopping records, information about web pages the user has visited, and position information search history. However, there is limitations in analyzing the user's usual thoughts or matters of interest based on inputs from the user.

The above information is presented as background information only to assist with an understanding of the present disclosure. No determination has been made, and no assertion is made, as to whether any of the above might be applicable as prior art with regard to the present disclosure.

### SUMMARY OF THE INVENTION

The present disclosure is designed to address at least the above-mentioned problems and/or disadvantages and to provide at least the advantages described below.

Accordingly, an aspect of the present disclosure is to provide a method and apparatus for intelligently providing a user with emotional information by collecting information about the user's usual thoughts or matters of interest.

In accordance with an aspect of the present disclosure, there is provided an intelligent information providing method including: detecting a pen touch input; determining an environment in which the pen touch input is made; collecting information corresponding to the pen touch input; building a context model for the collected information in consideration of the environment in which the pen touch input is made; and providing inference information corresponding to the built context model.

In accordance with another aspect of the present disclosure, there is provided a terminal including: a touch screen configured to display information and to detect a touch input event that is input by a user; a controller; and a memory unit configured to store at least one input image and to store at least one program, wherein the at least one program is executed by the controller, detects a pen touch input, determines an environment in which the pen touch input is made, collects information corresponding to the pen touch input, builds a context model for the collected information in consideration of the environment in which the pen touch input is made, and includes a command for providing inference information corresponding to the built context model.

Other aspects, advantages, and salient features of the disclosure will become apparent to those skilled in the art from the following detailed description, which, taken in conjunction with the annexed drawings, discloses embodiments of the disclosure.

### BRIEF DESCRIPTION OF THE DRAWINGS

The above and other aspects, features and advantages of certain embodiments of the present disclosure will be more apparent from the following description taken in conjunction with the accompanying drawings, in which:
FIG. 1 is a block diagram illustrating a configuration of a terminal to which an intelligent information providing method according to an embodiment of the present disclosure is applied;
FIGS. 2A and 2B are front perspective views of a terminal to which an intelligent information providing method according to an embodiment of the present disclosure is applied;
FIG. 3 is a flowchart illustrating an intelligent information providing method according to an embodiment of the present disclosure;
FIGS. 4A-4C show examples of information that is collected by an intelligent information providing method according to an embodiment of the present disclosure;
FIG. 5 shows examples of context models that are built at step 304 of FIG. 3, according to an embodiment of the present disclosure; and
FIGS. 6A-6D show examples of recommendation information that is intelligently provided by an intelligent information providing method according to an embodiment of the present disclosure.

Throughout the drawings, like reference numerals will be understood to refer to like parts, components, and structures.

### DETAILED DESCRIPTION OF EMBODIMENTS OF THE PRESENT

### INVENTION

Hereinafter, embodiments of the present disclosure will be described in detail with reference to the appended drawings. However, the present disclosure is not limited to the embodiments. Also, like reference numerals indicate members performing the substantially same functions throughout the drawings.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present invention. The terminology used herein is for the purpose of describing particular embodiments only and is not intended to be limiting of the invention. As used herein, the singular forms "a", "an" and "the" are intended to include the plural forms as well, unless the context clearly indicates otherwise.

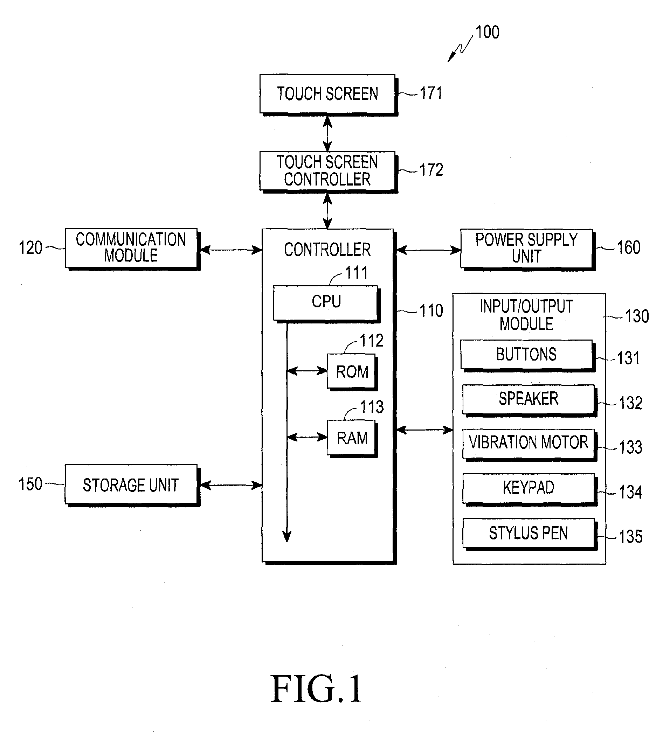

FIG. 1 is a block diagram illustrating a configuration of a terminal to which an intelligent information providing method according to an embodiment of the present invention is applied.

Referring to FIG. 1, a terminal 100 may include a controller 110, a communication module 120, an input/output module 130, a storage unit 150, a power supply unit 160, a touch screen 171, and a touch screen controller 172.

The controller 110 may include a Central Processing Unit (CPU) 111, Read Only Memory (ROM) 112 that stores control programs for controlling the terminal 100, and Random Access Memory (RAM) 113 that temporarily stores signals/data received from the outside of the terminal 100 or is used as a workspace for operations performed in the terminal 100. The CPU 111, the ROM 112, and the RAM 113 may be connected to each other through internal buses. Also, the controller 110 may control the communication module 120, the input/output module 130, the storage unit 150, the power supply unit 160, the touch screen 171, and the touch screen controller 172. The controller 110 may be configured with a single-core, or with a multi-core, such as a dual-core, a triple-core, or a quad-core. The controller 110 may be configured with a predetermined number of cores by one of ordinary skill in the art according to the properties of the terminal 100.

The communication module 120 may include at least one of a cellular module, a Wireless Local Area Network (WLAN) module, and a short-range communication module.

The cellular module enables the terminal 100 to connect to an external device through mobile communication using at least one antenna (not shown), under the control of the controller 110. The cellular module may transmit/receive radio signals for voice calls, video calls, Short Message Service (SMS) messages, or Multimedia Message Service (MMS) messages to/from a mobile phone (not shown), a smart phone (not shown), a tablet PC (not shown), or another device (not shown), a phone number of each of which is entered or registered in the terminal 100.

The WLAN module may connect to the Internet at a place in which a wireless Access Point (AP) is installed, under the control of the controller 110. The WLAN module supports IEEE802.11x (or other suitable wireless standard). The WLAN module may drive a Wi-Fi Positioning System (WPS) that acquires position information of the terminal 100 based on position information provided from a Wireless Access Point (WAP) connected wirelessly.

The short-range communication module may perform wireless short-range communication between terminals, under the control of the controller 110. The short-range communication module may perform communication based on short-range communication, such as Bluetooth®, Infrared Data Association (IrDA), WiFi-Direct communication, Near Field Communication (NFC), etc.

The input/output module 130 may include at least one of one or more buttons 131, a speaker 132, a vibration motor 133, a keypad 134, and a stylus pen 135.

The buttons 131 may be provided in the front, side, and/or rear part of the housing of the terminal 100. The buttons 131 may include at least one of a power/lock button (not shown), volume buttons (not shown), a menu button (not shown), a home button (not shown), a back button (not shown), and a search button (not shown).

The speaker 132 may output sound corresponding to various signals (for example, radio signals and broadcasting signals) from the cellular module, the WLAN module, and the short-range communication module, to the outside of the terminal 100, under the control of the controller 110. The speaker 132 may be provided as at least one unit at an appropriate location (or locations) on the housing of the terminal 100.

The vibration motor 133 may convert electrical signals into mechanical vibration, under the control of the controller 110. The vibration motor 133 may be provided as at least one unit in the housing of the terminal 100.

The speaker 132 and the vibration motor 133 may operate according to a setting of a volume operating mode of the terminal 100. For example, the terminal 100 may be set to one of volume operating modes of a sound mode, a vibration mode, a sound & vibration mode, and a silent mode. The controller 110, based on the set volume operating mode, may output a signal instructing operation of the speaker 132 or the vibration motor 133 according to a function that is performed by the terminal 100.

The keypad 134 may receive key input from a user in order to control the terminal 100. The keypad 134 may be a physical keypad (not shown) that is provided on the terminal 100, or a virtual keypad (not shown) that is displayed on the touch screen 171.

The stylus pen 135 may be configured to provide a signal based on which the touch screen 171 can sense a touch input by the stylus pen 135. When the stylus pen 135 approaches or contacts the touch screen 171, the touch screen 171 cansense a signal provided from the stylus pen 135.

The storage unit 150 may store signals or data that is input/output according to operations of the communication module 120, the input/output module 130 and the touch screen 171, under the control of the controller 110. The storage unit 150 may store control programs and applications for controlling the terminal 100 or the controller 110.

In this description, the term a "storage unit" includes the storage unit 150, the ROM 112 or RAM 113 included in the controller 110, and a memory card (not shown, for example, a Secure Digital (SD) card or a memory stick) installed in the terminal 100.

The storage unit 150 may be a non-volatile memory, a volatile memory, a Hard Disk Drive (HDD), or a Solid State Drive (SSD).

The power supply unit 160 may supply power to at least one battery (not shown) included in the housing of the terminal 100, under the control of the controller 110. The battery may supply power to the terminal 100. Also, the power supply unit 160 may supply power received from an external power source (not shown) through a wired cable connected to a connector of the terminal 100, to the terminal 100. Also, the power supply unit 160 may supply power received wirelessly from an external power source (not shown) through wireless charging, to the terminal 100.

The touch screen 171 may provide a user with User Interfaces (UIs) corresponding to various services (for example, a call, data transmission, broadcasting, and photographing), based on Operating System (OS) of the terminal 100. The touch screen 171 may output an analog signal corresponding to at least one touch input inputted to a UI to the touch screen controller 172. The touch screen 171 may receive at least one touch input through a user's body part (for example, a user's finger including a thumb) or a pointing unit (for example, a stylus pen).

The touch screen 171 may be a resistive touch screen, a capacitive touch screen, an infrared touch screen, or an acoustic wave touch screen.

Additionally, the touch screen controller 172 may control output values of the touch screen 171 so that display data provided from the controller 110 can be displayed on the touch screen 171. Also, the touch screen controller 172 may convert analog signals received from the touch screen 171 into digital signals (for example, X and Y coordinates), and transfer the digital signals to the controller 110. The controller 110 may process a user input using data provided from the touch screen 171 and the touch screen controller 172. That is, the controller 110 may control the touch screen 171 using digital signals received from the touch screen controller 172. For example, the controller 110 may select a shortcut icon (not shown) displayed on the touch screen 171 or execute the shortcut icon, in response to a touch event or a hovering event. The touch screen controller 172 may be included in the controller 110.

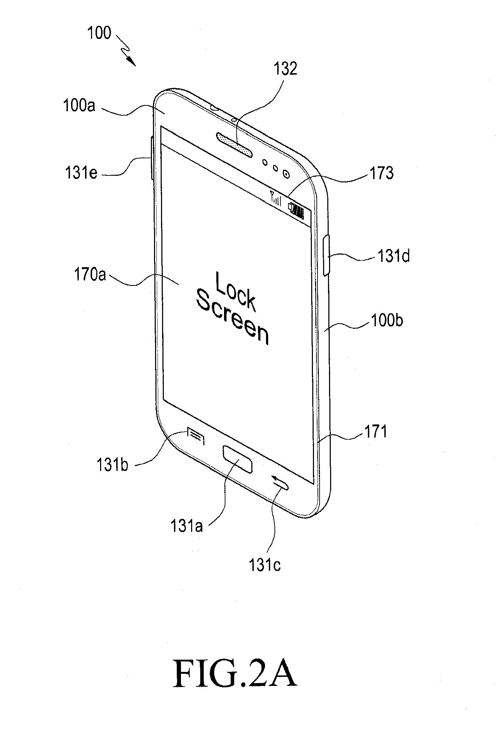

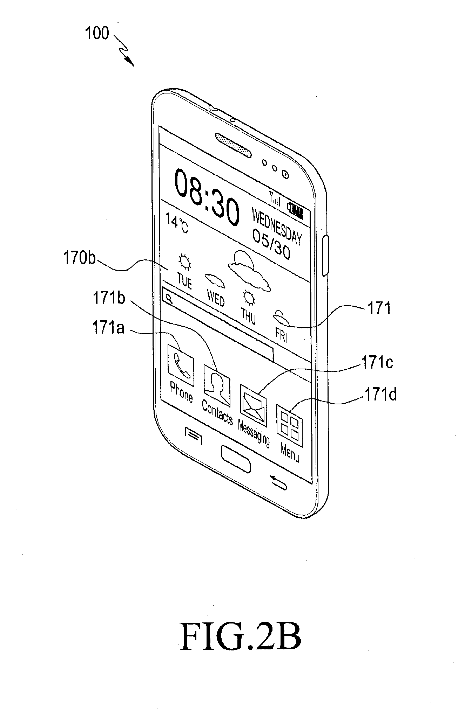

FIGS. 2A and 2B are front perspective views of a terminal to which an intelligent information providing method according to an embodiment of the present disclosure is applied.

Referring to FIGS. 2A and 2B, the touch screen 171 may be disposed in the front, center part 100a of the terminal 100. The touch screen 171 may occupy the major area of the front, center part 100a. FIG. 2A shows an example in which a lock screen 170a is displayed on the touch screen 171. The lock screen 170a is a screen that is first displayed on the touch screen 171 when the terminal 100 is powered on. The lock screen 170a provides an environment in which a user can access the terminal 100 by inputting security information (for example, a password or a security pattern) set by the user. Accordingly, the controller 110 (see FIG. 1) may check the validity of security information (for example, a password or a security pattern) input by a user, and then converts the lock screen 170a to a home screen 170b (FIG. 2B) according to the result of the validity check.

The lock screen 170a may be configured to receive a password or a security pattern. Also, the lock screen 170a may be configured to change to the home screen 170b according to a touch input or a drag input from a user, without receiving a password or a security pattern, when the user has not set any security information.

With reference to FIG. 2B, the home screen 170b may include different home screens of several pages, and the first one of the home screens may be a main home screen. On the home screen 170b, shortcut icons 171a, 171b, and 171c for executing applications being often used, a main menu conversion key 171 d, clock, weather, and the like may be displayed. The main menu conversion key 171d is used to display a menu screen on the touch screen 171. On the upper area of the touch screen 171, a status bar 173 representing the status of the terminal 100, such as battery level, intensity of reception signals, current time, and volume operating mode, may be displayed.

With reference again to FIG. 2A, below the touch screen 171, a home button 131 a, a menu button 131 b, and a back button 131c may be provided.

The home button 131 a is used to display a main home screen on the touch screen 171. For example, if the home button 131 a is pressed (or touched) when a menu screen or another home screen is displayed on the touch screen, than the main home screen is displayed on the touch screen 171, and the menu screen or the other home screen may be converted to the main home screen. Also, if the home button 131 a is pressed (or touched) while an application is executed on the touch screen 171, the execution screen of the application may be converted to the main home screen. The home button 131 a may be also used to display recently used applications on the touch screen 171 or to display a task manager.

The menu button 131 b may provide connectivity menus (not shown) that can be used on the touch screen 171. The connectivity menus may include a widget adding menu, a background image changing menu, a search menu, an edit menu, and an environment setting menu.

The back button 131c may be used to display a screen displayed just before a current screen or to quit a most recently used application.

In the upper, center part of the front side of the terminal 100, the speaker 132 may be disposed. In the lateral sides of the terminal 100, a power/reset button 131 d and volume buttons 131e may be disposed.

Methods according to embodiments of the present disclosure may be implemented in the form of program instructions that can be executed using various types of computer means and may be stored on a computer-readable medium. The computer-readable medium may include program instructions, data files, data structures, etc. independently or in combination. The program instructions stored on the medium may be designed especially for the present disclosure or may also be known to and be used by those skilled in the art of computer software.

Also, methods according to embodiments of the present disclosure may be implemented in the form of program instructions and stored in the storage unit 150 of the terminal 100. The program instructions may be temporarily stored in the RAM 113 included in the controller 110 in order to execute the methods. Accordingly, the controller 110 may control hardware components included in the terminal 100, and in response to the program instructions for executing the methods, the controller 110 temporarily or permanently stores data generated when the methods are executed, in the storage unit 150, and provide the touch screen controller 172 with UIs needed for executing the methods.

An intelligent information providing method according to an embodiment of the present disclosure may be stored in and executed by the terminal 100 as described above. However, the intelligent information providing method may be stored in any terminal that can detect pen touch inputs, for example, in a Personal Computer (PC), a laptop computer, or a table PC.

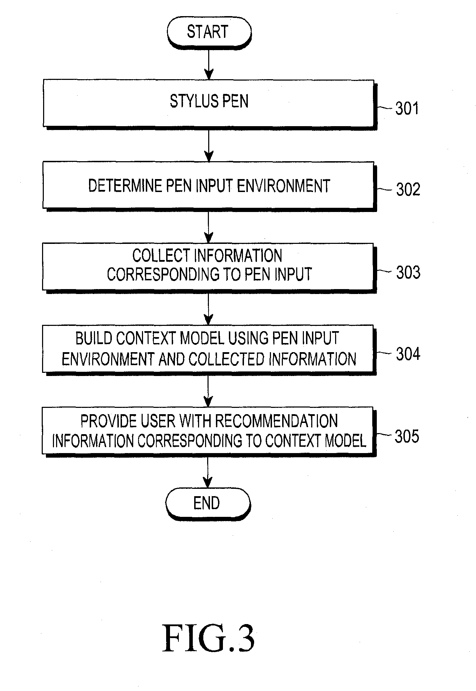

FIG. 3 is a flowchart illustrating an intelligent information providing method according to an embodiment of the present disclosure. Referring to FIG. 3, an intelligent information providing method according to an embodiment of the present disclosure may start operating when detecting a pen touch input. That is, when a pen touch input is made on the touch screen 171 (see FIG. 2A), the controller 110 (see FIG. 1) may start performing the intelligent information providing method, at step 301.

For example, the controller 110 may detect a pen touch input, based on a change in electromagnetic induction or capacitance, received by the touch screen 171 and determine whether a stylus pen hovers over the touch screen 171, whether a stylus pen contacts the touch screen 171, whether a button is pressed, or whether pressing of a button is released, based on the change in electromagnetic induction or capacitance.

A user may store information about goods of interest, information to remember, and information of interest, using a calendar application, a diary application, or a memo note application. Also, the user may underline or circle an area of information which the user is interested in or which is determined to be important, in data displayed through a webpage application or a document application. Also, the user may cut various data displayed on the terminal in the form of images to clip them. Accordingly, there may be a need to analyze the meaning or context of information input by the user in consideration of the user's various use environments. The controller 110 determine an environment in which the pen touch input is made, at step 302. The environment in which the pen touch input is made is determined in order to collect information about the user's usual thoughts or matters of interest in view of emotion. The environment in which the pen touch input is made may be an application (hereinafter, referred to as an "execution application") being executed when the pen touch input is made. According to an embodiment of the present disclosure, the terminal 100 may execute a plurality of applications at the same time in such a manner that at least one application is displayed on a display screen of the terminal 100, and the remaining at least one application is executed on a background without being displayed on the display screen. Information about the embodiment in which the pen touch input is made may be used to configure context of data that is generated by the pen touch input, at step 304, and accordingly, it may be advantageous to determine an application that is displayed on the display screen.

The execution application may be an application that is currently displayed on the display screen among at least one application that is executed on the terminal 100.

Also, the environment in which the pen touch input is made may include information about a time at which the pen touch input is made and information about a place in which the pen touch input is made. In this case, the controller 110 may detect the information through at least one sensor included in the terminal 100.

At step 303, the controller 110 may collect data (hereinafter, referred to as "pen input data") that is generated by the pen touch input. For example, the controller 110 may collect pen input data in consideration of the environment in which the pen touch input is made.

The pen input data may include information according to a handwriting, an image, or an object, and may be input in the form of a character, a line, a symbol, a pattern, a numeral, or a combination of two or more of the above. Accordingly, the pen input data may include a character, a line, a symbol, a pattern, a figure, a combination of two or more of the above, content of a currently displayed memo, content of a memo existing in an area indicated by the line, the symbol, the pattern, the figure, or the combination of two or more of the above, and an image indicated by the line, the symbol, the pattern, the figure, or the combination of two or more of the above.

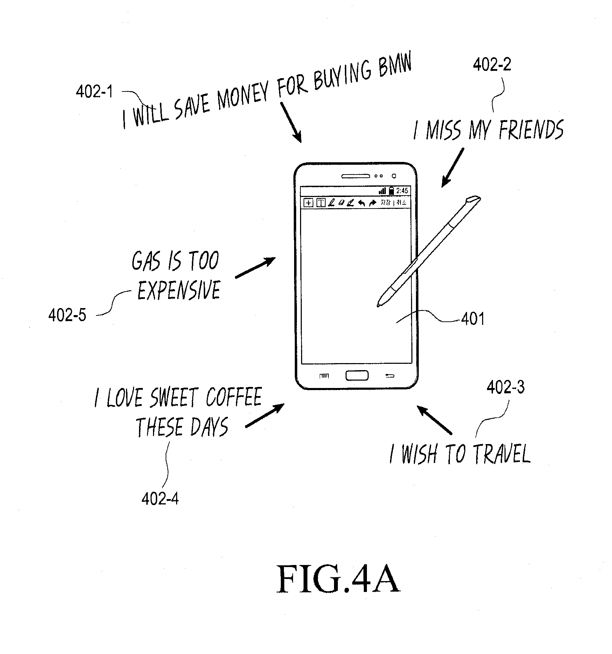

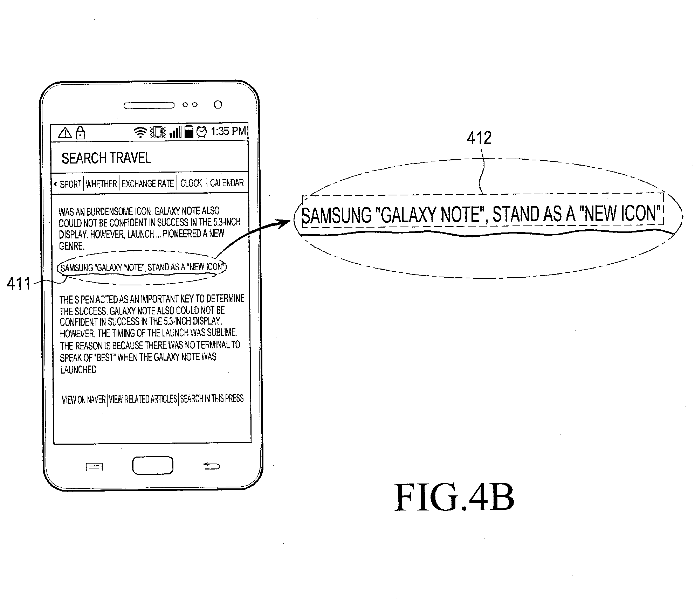

For example, as shown in FIG. 4A, the controller 110 may detect characters or data input by a user on a calendar application, a diary application, or a memo note application 401, as handwriting images 402-1, 402-2, 402-3, 402-4, and 402-5, through a handwriting recognition algorithm. More specifically, when a calendar application, a diary application, or a memo note application 401 is executed, the controller 110 may receive coordinate values of touch points on the touch screen 171, stores the coordinate values of the touch points as strokes, and creates a stroke array using the strokes. Then, the controller 110 may recognize handwritten content based on the stroke array and a handwriting library stored in advance.

In another example, if a user makes a pen touch input 412, such as underlining or circling, on the touch screen 171 when predetermined data is displayed on the touch screen 171 through a webpage application or a document application (411), the controller 110 may recognize characters corresponding to an area in which the pen touch input 412 is made. For example, the controller 110 may recognize characters corresponding to an area in which the pen touch input 412 is made, through an Optical Character Recognition (OCR) algorithm or the like.

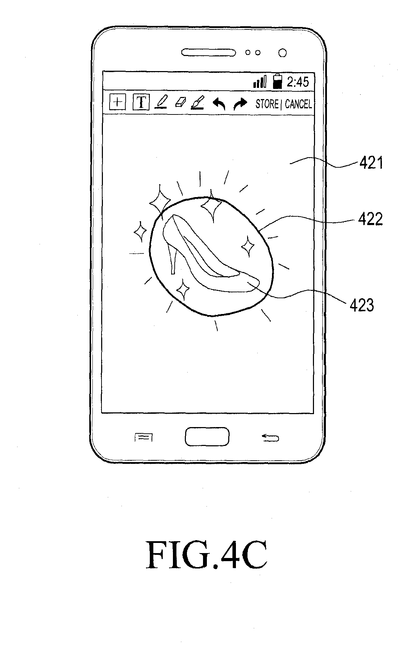

In still another example, the controller 110 may clip information displayed in an area in which a pen touch input is made. For example, referring to FIG. 4C, if a user makes a predetermined pen touch input defined as a clip function in an area on the touch screen 171 when predetermined data is displayed on the touch screen 171 (421), for example, if a pen touch input of drawing a closed figure is made on the touch screen 171 (422), the controller 110 may produce an image of information displayed inside the closed figure, and store the image.

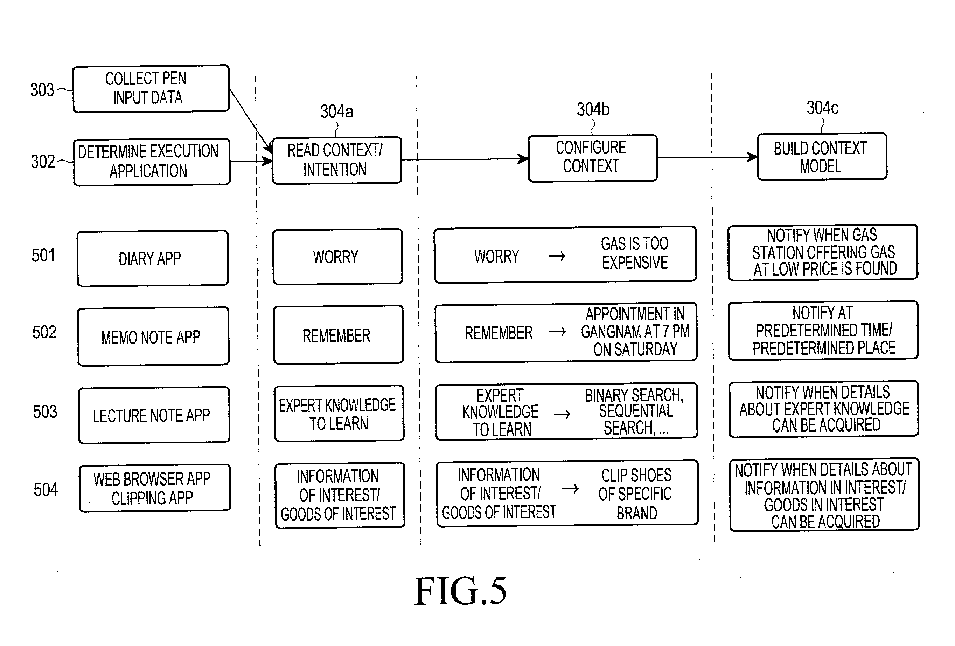

The controller 110 may store the image as pen input data. Then, at step 304, the controller 110 may read context or intention corresponding to the pen touch input, based on the pen input data and the environment in which the pen touch input is made (step 304a of FIG. 5). More specifically, the controller 110 may applie Natural Language Interaction (NLI) to the pen input data in consideration of an environment (for example, an execution application) in which the pen touch input is made, thereby dividing the pen input data into meaning units, such as a word, a sentence, or a keyword. Then, the controller 110 may read context or intention of the pen touch input based on the divided words, sentences, or keywords. In accordance with embodiments of the present disclosure, a method of determining context or intention based on words, sentences, or keywords includes searching in context/intention-related database configured in advance, performing predetermined logical inference through a predetermined algorithm, or performing pattern recognition based on an input pattern, such as words, sentences, or keywords.

The controller 110 may link the read context or intention to data (a target object) generated by the pen touch input to configure context (at step 304b of FIG. 5), then match the target object for which the context is configured with a predetermined context model, and store the result of the matching (at step 304c of FIG. 5). For example, the controller 110 may configure characters corresponding to the pen input data, for example, a handwriting input or an underline input, as a word or a sentence divided in a meaning unit. Also, the controller 110 may configure a keyword indicated by a clipped image. Then, the controller 110 may read predetermined context or intention based on the word, the sentence, or the keyword divided in a meaning unit, and link the pen input data to the read context or intention to configure context. Next, the controller 110 may match the pen input data for which the context is configured with a predetermined context model.

Referring to FIG. 5, for example, when a diary application 501 is executed, the controller 110 may determine that pen input data (for example, "Gas is too expensive") has a word or a sentence including context or intention that is read as a "worry." In this case, the controller 110 may link the read context or intention ("a worry") to the pen input data ("Gas is too expensive") to configure context, and store the context. Thereafter, the controller 110 may match the pen input data ("Gas is too expensive") with a predetermined context model (for example, "notify when a gas station offering gas at a low price is found"), and store the result of the matching.

In another example, when a memo note application 502 is executed, the controller 110 may determine that pen input data (for example, "appointment in Gangnam at 7 PM on Saturday") has a word or a sentence including context or intention that is read as an "event to remember". In this case, the controller 110 may link the read context or intention ("an event to remember") to the pen input data ("appointment in Gangnam at 7 PM on Saturday") to configure context, and store the context. Thereafter, the controller 110 may match the pen input data ("appointment in Gangnam at 7 PM on Saturday") with a predetermined context model (for example, "notify at a predetermined time or a predetermined place"), and store the result of the matching.

In another example, when a lecture note application 503 is executed, the controller 110 may determine that pen input data (for example, "binary search, sequential search") has a word or a sentence including context or intention that is read as "knowledge to learn". In this case, the controller 110 may link the read context or intention ("knowledge to learn") with the pen input data ("binary search, sequential search") to configure context, and store the context. Thereafter, the controller 110 may match the pen input data ("binary search, sequential search") with a predetermined context model ("notify when details of expert knowledge can be acquired"), and store the result of the matching.

In another example, when a web browser application 504 is displayed, the controller 110 may determine that pen input data (for example, "goods brand" or "clipping information about goods") has context or intention that is read as "information of interest" or "goods of interest". In this case, the controller 110 may link the read context or intention ("information of interest, goods of interest") to the pen input data ("goods brand" or "clipping information about goods") to configure context, and store the context. Thereafter, the controller 110 may match the pen input data ("goods brand" or "clipping information about goods") with a predetermined context model ("notify when details about goods in interest can be acquired"), and store the result of the matching.

At step 303 of FIG. 3, an example of detecting pen input data has been described, however, data that is generated by a touch input using a user's body may be detected. In accordance with embodiments of the present disclosure, when context is configured or when a context model is configured, data that is generated by a touch input using a user's body may be distinguished from data that is generated by a pen touch input. Accordingly, the controller 110 may configure context and a context model in consideration of whether input data is data generated by a pen touch input or a user's body.

Also, according to an embodiment of the present disclosure, an example of applying NLI to pen input data to divide the pen input data into meaning units, such as a word, a sentence, or a keyword, and disclosurepredetermined context or intention based on the word, the sentence, or the keyword has been described, however, the present disclosure is not limited to this. The pen input data may include various shapes of symbols and an image, as well as a word, a sentence, and a keyword. The various shapes of symbols and the image may be read as context or intention, based on semiotics in the humanities field in which the functions and analysis of symbols, signification and expressions, and various systems related to communication are studied, recognition and analysis of symbols for flowcharts and design drawings used in the mechanical/electronic/computer field, and recognition and analysis of symbols for complex chemical structures used in the chemical field.

At step 305, the controller 110 may applie a context inference scheme to the context model and provides the result to the terminal 100 using sound or display data.

The context inference scheme is to infer a current situation of the terminal 100 using data collected or sensed by the terminal 100, based on a learned context model, and to provide recommendation information associated with the current situation. More specifically, the controller 110 may monitor data related to the context model stored in advance. If the controller 110 finds data related to the context model, the controller 110 may infer a current situation of the terminal 100 based on the found data. Then, the controller 110 may create recommendation information in consideration of the inferred current situation and the context model, and provide the recommendation information to the user through a visual or auditory effect.

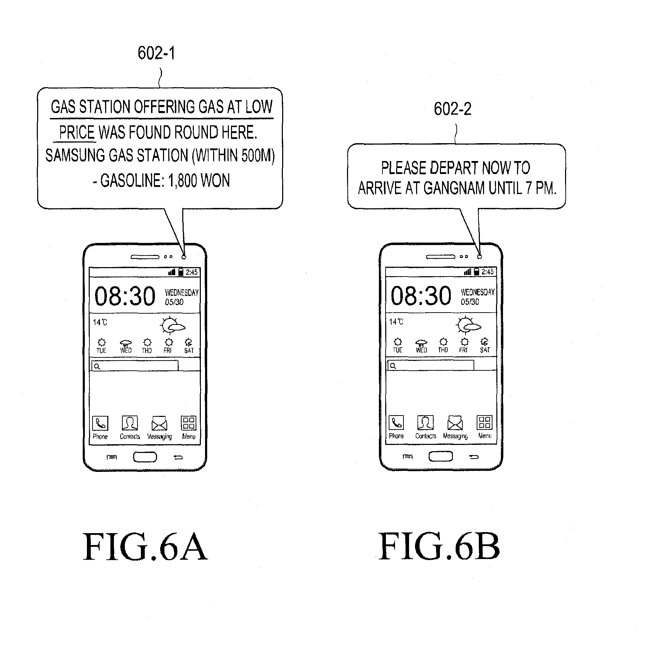

FIGS. 6A-6D show examples of recommendation information that is intelligently provided by an intelligent information providing method according to an embodiment of the present invention.

Referring to FIG. 6A, if the controller 110 (see FIG. 1) detects data (for example, speed that is equal to or higher than predetermined speed (e.g., 30km/h), a gas station offering gas at the lowest price (or at a price close to the lowest price), etc.) related to a first context model (for example, "notify when a gas station offering gas at a low price is found during driving") while monitoring data (position information, information about connectable Internet, etc.) collected or sensed by the terminal 100 (see FIG. 1), the controller 110 may determine a current situation of the terminal 100, for example, whether a user is driving, and/or a distance between the terminal 100 and the gas station offering gas at the lowest price (at a price close to the lowest price). If the controller 110 determines that the current situation corresponds to the first context model (for example, "notify when a gas station offering gas at a low price is found during driving"), the controller 110 may create recommendation information corresponding to the first context model, wherein the recommendation information may include, for example, a name of the gas station offering oil (gasoline) at a price lower than the average price, a position of the gas station, a distance between the gas station and the terminal 100, and information about oil prices offered by the gas station. Then, the controller 110 may control a display or a speaker included in the terminal 100 to output the recommendation information (602-1).

In another example, referring to FIG. 6B, if the controller 110 detects data (for example, time information, current position information, etc.) related to a second context model (for example, "notify at a predetermined time or a predetermined place") while monitoring data collected or sensed by the terminal 100, the controller 110 may determine a current situation of the terminal 100, for example, a distance between an appointment place and a current place. Then, if the controller 110 determines that the current situation of the terminal 100 corresponds to the second context model, the controller 110 may create recommendation information corresponding to the second context model, wherein the recommendation information may include, for example, means of transportation for moving from the current place to the appointment place, the time required, a time at which a user needs to depart for the appointment place, etc.

Thereafter, the controller 110 may control a display or a speaker included in the terminal 100 to output the recommendation information (602-2).

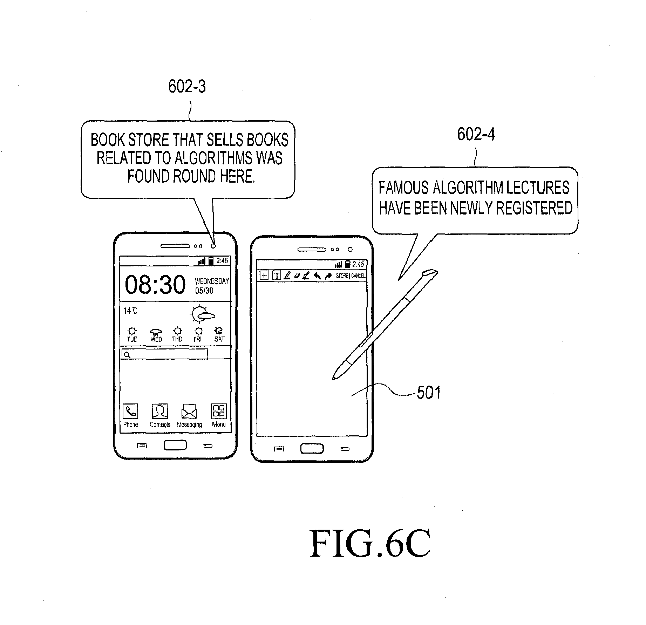

In another example, referring to FIG. 6C, if the controller 110 detects data (for example, time information, current position information, etc.) related to a third context model (for example, "notify when details about expert knowledge can be acquired") while monitoring data collected or sensed by the terminal 100, the controller 110 may determine a current situation of the terminal 100, for example, a position of the terminal 100, a book store, price information about books in the area of specialty in which a user is interested, and information about lectures in the area of specialty in which a user is interested. If the controller 110 determines that the current situation corresponds to the third context model (for example, "notify when details about expert knowledge can be acquired"), the controller 110 may create recommendation information corresponding to the third context model, wherein the recommendation information may include, for example, position information of a book store that sells, at low prices, books in the area of specialty in which the user is interested, price information about the books in the area of specialty, the time required to move from the current position to the book store, hours for the book store, and information about on-line lectures in the area of specialty in which the user is interested. Thereafter, the controller 110 may control a display or a speaker included in the terminal 100 to output the recommendation information (602-3 and/or 602-4).

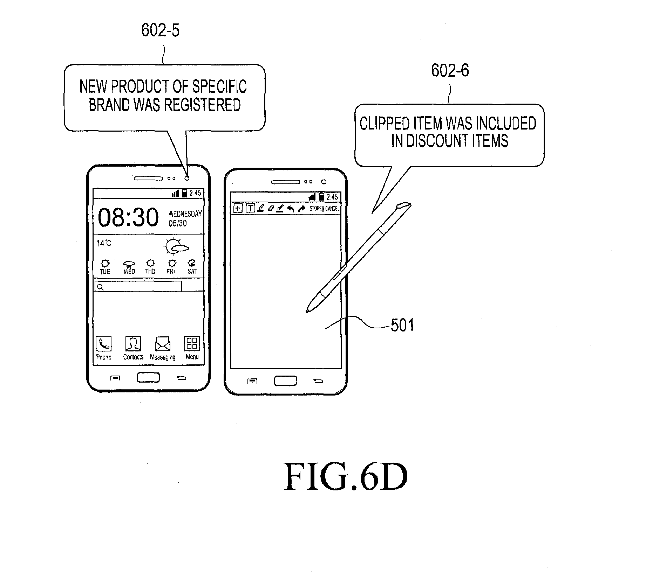

In another example, referring to FIG. 6D, if the controller 110 detects data (for example, time information, current position information, price information of goods, discount information of goods, etc.) related to a fourth context model (for example, "notify when details about goods of interest can be acquired") while monitoring data collected or sensed by the terminal 100, the controller 110 may determine a current situation of the terminal 100, for example, a store that sells the goods, a name of the store, a position of the store, price information about the goods, discount information about the goods, etc. If the controller 110 determines that the current situation corresponds to the fourth context model, the controller 110 may create recommendation information corresponding to the fourth context model, wherein the recommendation information may include, for example, whether there are goods of interest newly registered, position information of the store that sells the goods, price information about the goods, the time required to move from the current position to the store, and hours for the store. Thereafter, the controller 110 may control a display or a speaker included in the terminal 100 to output the recommendation information (602-5 and/or 602-6).

According to the embodiments of the present disclosure, as described above, by detecting a handwriting input using a pen to collect information about a user's usual thoughts or matters of interest, emotional information can be collected. Also, it is possible to provide more exact information required by a user based on the collected emotional information and to raise the reliability of information that is intelligently provided from a terminal.

The embodiments of the present disclosure can be realized in the form of hardware, software, or a combination of hardware and software. Any such software may be stored in volatile or non-volatile storage such as, for example, a storage device like a ROM, whether erasable or rewritable or not, in memory such as, for example, RAM, memory chips, device or integrated circuits, or in an optically or magnetically writable, machine (e.g., a computer)-readable medium such as, for example, a Compact Disk (CD), Digital Versatile Disk (DVD), magnetic disk or magnetic tape or the like.

The methods according to the embodiments of the present disclosuremay be implemented by a computer or a mobile terminal including a controller and a memory. The memory is an example of a machine-readable storage medium suitable to store a program or programs including instructions for implementing embodiments of the present disclosure. Accordingly, the methods according to the embodiments of the present disclosure include a program comprising code for implementing an apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

Also, the computer or the mobile terminal may receive and store the program from a program providing apparatus connected in a wired/wireless fashion thereto. The program providing apparatus may include a memory for storing a program including instructions to perform a predetermined content protection method, and information required for the content protection method, a communication unit for wired/wireless communication, and a controller for controlling transmission of program. When the program providing apparatus receives a request for providing the program from the computer or the mobile terminal, the program providing apparatus may provide the program to the computer or the mobile terminal in a wired/wireless fashion. The program providing apparatus may be configured to provide the program to the computer or the mobile terminal in a wired/wireless fashion, even when no request for providing the program is received from the computer or the mobile terminal, for example, when the computer or the mobile terminal is located in a specific location.

While the disclosure has been shown and described with reference to certain embodiments thereof, it will be understood by those skilled in the art that various changes in form and details may be made therein without departing from the spirit and scope of the disclosure as defined by the appended claims and their equivalents.

## Claims

1. An intelligent information providing method comprising:
detecting a pen touch input;
determining an environment in which the pen touch input is made;
collecting information corresponding to the pen touch input;
building a context model for the collected information in consideration of the environment in which the pen touch input is made; and
providing inference information corresponding to the built context model.

2. The intelligent information providing method of claim 1, wherein the environment in which the pen touch input is made includes an application being executed when the pen touch input is made.

3. The intelligent information providing method of claim 1, wherein collecting the information corresponding to the pen touch input further comprises:
detecting a handwriting input by the pen touch input; and
recognizing a character that is input by the handwriting input.

4. The intelligent information providing method of claim 1, wherein collecting the information corresponding to the pen touch input comprises:
detecting a line input by the pen touch input; and
recognizing a character included in an area corresponding to the line input.

5. The intelligent information providing method of claim 1, wherein building the context model comprises determining context or intention of the collected information, in consideration of the environment in which the pen touch input is made.

6. The intelligent information providing method of claim 5, wherein building the context model further comprises:
linking the read context or intention to the collected information to configure context.

7. The intelligent information providing method of claim 6, wherein building the context model further comprises:
building a context model corresponding to the context.

8. A terminal comprising:
a touch screen configured to display information and to detect a touch input event that is input by a user;
a controller; and
a memory unit configured to store at least one input image and to store at least one program,
wherein the at least one program is executed by the controller, detects a pen touch input, determines an environment in which the pen touch input is made, collects information corresponding to the pen touch input, builds a context model for the collected information in consideration of the environment in which the pen touch input is made, and includes a command for providing inference information corresponding to the built context model.

9. The terminal of claim 8, wherein the environment in which the pen touch input is made is an application being executed when the pen touch input is made.

10. The terminal of claim 8, wherein the at least one program collects information corresponding to the pen touch input, detects a handwriting input by the pen touch input, and includes a command for recognizing a character that is input by the handwriting input.

11. The terminal of claim 8, wherein the at least one program detects a line input by the pen touch input and includes a command for recognizing a character included in an area corresponding to the line input.

12. The terminal of claim 8, wherein the at least one program reads context of the collected information in consideration to the environment in which the pen touch input is made and stores the context.

13. The terminal of claim 8, wherein the at least one program comprises:
a command for linking the read context to the collected information to configure the context.

14. The terminal of claim 8, wherein the at least one program comprises:
a command for building a context model corresponding to the context.
